# EUROPEAN PATENT SPECIFICATION

(11) **EP 2 339 532 B1**
(45) Date of publication and mention of the grant of the patent: **08.04.2015**
(21) Application number: 10189764.3
(22) Date of filing: 03.11.2010
(51) Int. Cl.: G06T 5/00, G06T 5/50, G06T 5/20

(54) **Depth compensated noise reduction in multi-view video**
Tiefenkompensierte Unterdrückung von Rauschen in Mehrfachansichtvideo
Réduction du bruit compensée en profondeur dans une vidéo à vues multiples

(30) Priority: 17.11.2009 TR 200908688
(43) Date of publication of application: 29.06.2011
(73) Proprietor: Vestel Elektronik Sanayi ve Ticaret A.S., 45030 Manisa (TR)
(72) Inventor: Cigla, Cevahir, Ankara (TR)
(74) Representative: Cayli, Hülya

(56) References cited:
- WO-A2-2008/119480
- US-A- 5 604 856
- BUADES T ET AL: "A note on multi-image denoising", LOCAL AND NON-LOCAL APPROXIMATION IN IMAGE PROCESSING, 2009. LNLA 2009. INTERNATIONAL WORKSHOP ON, IEEE, PISCATAWAY, NJ, USA, 19 August 2009 (2009-08-19), pages 1-15, XP031540963, ISBN: 978-1-4244-5167-8
- LI ZHANG ET AL: "Multiple view image denoising", COMPUTER VISION AND PATTERN RECOGNITION, 2009. CVPR 2009. IEEE CONFERENCE ON, IEEE, PISCATAWAY, NJ, USA, 20 June 2009 (2009-06-20), pages 1542-1549, XP031607363, ISBN: 978-1-4244-3992-8
- YONG SEOK HEO ET AL: "Simultaneous Depth Reconstruction and Restoration of Noisy Stereo Images using Non-local Pixel Distribution", COMPUTER VISION AND PATTERN RECOGNITION, 2007. CVPR '07. IEEE CONFERENCE ON, IEEE, PISCATAWAY, NJ, USA, 1 June 2007 (2007-06-01), pages 1-8, XP031114256, ISBN: 978-1-4244-1179-5

## Description

### Technical Field of Invention

This invention relates to a method for noise reduction in multiview video which is obtained through observation of a scene from multiple cameras.

### Prior Art

In multiview processing area, most of the research has focused on 3D model estimation such as depth map, layered representations, depth based rendering in order to obtain high quality images from arbitrary camera locations for the application of free-view TV and multiview coding for transmitting highly redundant data in an optimized way. In that manner, these three problems are in the standardization efforts. Considering the achievements in multiview processing, displays which provide multiple views at the same time create a 3D feeling, which is crucial for the future technology.

Multiview image enhancement is considered in the context of histogram equalization among different views in order to obtain colour wise consistent images, such as in Histogram Based Pre-filtering for Luminance and Chrominance Compensation of Multi-view Video, IEEE Transactions on Circuits and Systems for Video Technology, vol. 18, No. 9, September 2008. However, other enhancement techniques such as sharpness enhancement or noise reduction have not yet taken much attention. The idea of utilizing multiple observations is applied in motion based denoising algorithms in traditional (mono view) videos, such that estimated motion vectors between consecutive frames provide multiple observations of a pixel. Hence, these extra observations are cleverly utilized to estimate noise component and remove it. In that manner, there is a plenty of motion based denoising algorithm in the prior art which provide less noisy mono videos. The main idea behind motion compensated denoising is to filter intensity values of the pixels by using the corresponding pixels matched in the previous and following frames. In this way, temporally consistent and less noisy frames are obtained.

In US 5.604.856, method and system for denoising on consecutive computer generated images in video by the help of estimated motion field and known 3D structure is disclosed. The 3D structure in that application is utilized for deciding the visibility of pixels and their corresponding matches in the other frames. Considering the visible regions in the other frames, the intensity values of the pixels are updated by filtering among multiple observations as long as the pixels are visible. The estimated motion field is the tool which maps pixels among different frames.

There are fundamental differences between the present invention and the prior art documents such as patent application with publication number US 2007/0047021. Firstly, the present method is applied to multiple camera views at a time instant with the known 3D structure, such as depth, while the prior arts deal with mono view video and utilizes consecutive time instants to get multiple observations with known motion field. In that manner, noise is removed from multiple views at a time instant in the present invention, but the prior arts achieve temporal noise reduction for single view among different time instants. Secondly, by algorithm in the present invention is obtained noise free views among different camera views which include different camera parameters, noise structures although they observe the same scene. In other words, the working principle of the prior arts bases on single camera view with constant noise structure and camera parameters, through consecutive frames. Hence, the reflectance properties, lightening is more effective in the multiple views denoising problem than single camera video.

The spatial denoising of an image is still a widely applied enhancement technique for denoising from single observation. In the solution of this problem there are very different approaches such as checking neighbours of a pixel and smoothing regions which do not involve any textured surfaces, or analysis for multi resolution, frequency based methods, etc. The same ideas can also be applied to multiview image denoising filtering each view independently; however this method lacks additional observations from other cameras and involves the same disadvantages of single image denoising.

In a recent conference paper a multi-view denoising algorithm is presented as "Multiple View Image Denoising" by Li Zhang et' al in Conference on Computer Vision and Pattern Recognition, July 2009. This work extends a single image denoising algorithm to multiview exploiting the advantage of increase in the observed data. The algorithm is based on non-local processing which actually extracts similar window patches and groups them as a class, then performs principal component or tensor analysis. The utilization of depth map is not significant, since for a present window patch in one of the views a search is executed to detect similar window patches in the other views. Depth map is exploited for checking whether the detected patches have similar depth distribution. Thus, an important tool which is the visibility is not considered in this work, moreover principal component analysis and tensor analysis are complex methods for consumer electronics and may not be implemented in real time. The geometric distortions such as planar deformations of the used patches are not considered which may cause mismatches and additional errors during the noise reduction.

Document BUADES T ET AL: "A note on multi-image denoising", LOCAL AND NON-LOCAL APPROXIMATION IN IMAGE PROCESSING, 2009. LNLA 2009. INTERNATIONAL WORKSHOP ON, IEEE, PISCATAWAY, NJ, USA, 19 August 2009, pages 1-15, ISBN: 978-1-4244-5167-8 discloses a method for multi-image denoising. In this document, multiple images are taken by a camera in a burst mode and denoising is performed for these images to get a sharp and denoised image. According to this document, multiple images taken in a burst mode are compared pixel by pixel to each other and one noise free image is generated. Similarly, patent document with number WO2008119480A2 discloses denoising of an image frame using sequential image frames. In this document, sequential images are compared and one noise free image is generated. However, in these documents compared images are taken from the same point at different time periods. Furthermore, these documents do not compare foreground/background objects in an image.

Until this time, multiview image denoising based on depth maps has not been performed excluding the recent paper (Multiple View Image Denoising), which does not exploit depth map so strongly such as constraining visibility in 3D. In addition, the complexity of that algorithm is so high due to patch search step among all of the camera views. Although the presented results are promising, the algorithm is prone to fail when the internal camera calibration differences among cameras result in changes in the colour gamut of the different views which is a common case actually. In that manner, that study can be considered as a small extension of non-local processing based single image denoising algorithms with the additional views from different locations, with a weak constraint on 3D structure. Instead, some well known methods such as single image denoising and motion compensated video denoising can be considered as the prior art which are the most close problems to the proposed problem of multi-view denoising. In that manner, the prior art is not capable of utilizing multiple observations which are obtained among different cameras pointing the same scene at the same time. The redundancy through these views is very important for detecting the noisy pixels and removing the existent noise. In the prior art involving single image denoising, noise reduction is achieved by spatially constraining pixels to their neighbours and making some assumptions, such as similar intensity among neighbouring pixels. Such an approach results in smoothed areas and possible detail loss which are undesired cases. On the other hand, for the motion compensated denoising approach, the visibility which is crucial for determining matched pixels and candidate intensity values, may cause serious problems as long as the 3D structure is not known. Since 2D projections obtained through the observation of a 3D scene from only one camera causes the extraction of 3D structure which is impossible without any additional information. The additional information originating from the observation of a scene from multiple cameras, which is 3D structure, provides relation between the pixels from different cameras. Hence, denoising can be achieved more reliable by the inclusion of 3D information.

The advantage in multi-view systems is that maximum information about a video is available involving 3D structure extracted from the geometry between different camera locations, motion field obtained from colour and depth similarity among consecutive frames and multiple observations of 3D points through multiple cameras. Hence, the said information is used for removing noise from all of the cameras, by first applying temporal noise reduction and then performing denoising among different cameras through median filtering of RGB values. The noise reduction in multiview systems provides frames of different cameras to be consistent hence less artifact in the multiview or free-view displays.

### Brief Description of Invention

The present invention is a method for noise reduction in multiview video which is obtained through observation of a scene from multiple cameras at the same time. Such a capture mode makes the 3D structure estimation of the scene available such as view dependent dense depth map representation. Once the 3D structure is estimated, pixels in each view can be matched to the pixels in the other views by the utilization of dense depth maps. Those pixels actually correspond to the same 3D point; hence multiple observation of any 3D point is achieved in such a setup. Noisy data is detected by those observations to remove the noise components. In that manner, before obtaining the observations, first the multiple views are calibrated in terms of colour gamut by any multiview histogram equalization algorithm in order to provide colour wise consistent images. Then, for each pixel the candidate RGB values are obtained by mapping the pixel to the other images via depth maps. During the mapping, the occlusion and visibility of the pixels are considered, and the observations from the visible regions for a corresponding pixel are taken into consideration. The visibility state is determined by the depth ordering which is a vital tool for depth comparison. In addition to depth ordering, the errors at the object boundaries in the estimated depth maps are handled by simple RGB comparison. Once the true candidate RGB values are obtained from the observations, median filtering is applied to remove most probable noisy data which involve highest and smallest observation data. The method removes noise from the multiview data for a certain time instant; however a simple extension can also be achieved for every time instant. Once each camera view is denoised temporally, the method in the present invention is applied for each time instant to each camera which removes noise among different cameras and provides colour wise consistent noise free video. In that way, the present invention provides high quality and artifact free multiview video for multiview or free-view displays.

In this invention, a scene is captured through multiple cameras located at different positions with different viewing angles simultaneously; thus highly redundant data is obtained. Since the characteristic of noise in multiple view video is very different than the noise structure in mono-view video or single images, the utilization of multiple cameras, for each view various sensor noise effects are observed, hence relating noise within different cameras is difficult. For any pixel in an image the corresponding match in the other views is found easily by mapping through the depth maps. In other words, the method in the present invention utilizes multiple noisy observations of a point in the scene and several assumptions in order to find the exact intensity values of the scene points and remove noise from the data. In that manner, the strongest assumption throughout the method in this invention is the Lambertian property of the scene. Lambertian surfaces provide same intensity and colour characteristics independent of the viewing angle, thus the matched pixels in different views have exactly the same intensities based on the Lambertian assumption.

### Objective of Invention

The aim of the present invention is to obtain noise free views among different camera views which include different camera parameters and noise structures although they observe the same scene.

Another aim of the present invention is to remove noise from multiple views for a time instant.

### Description of Figures

The invention is illustrated in the appended figures, in which;
Figure 1 shows the camera setup where the mapping of a pixel that is visible at every camera to each camera.
Figure 2 shows the different camera setup from Figure-1 where some points are occluded in some cameras.
Figure 3-a illustrates the viewing of left camera.

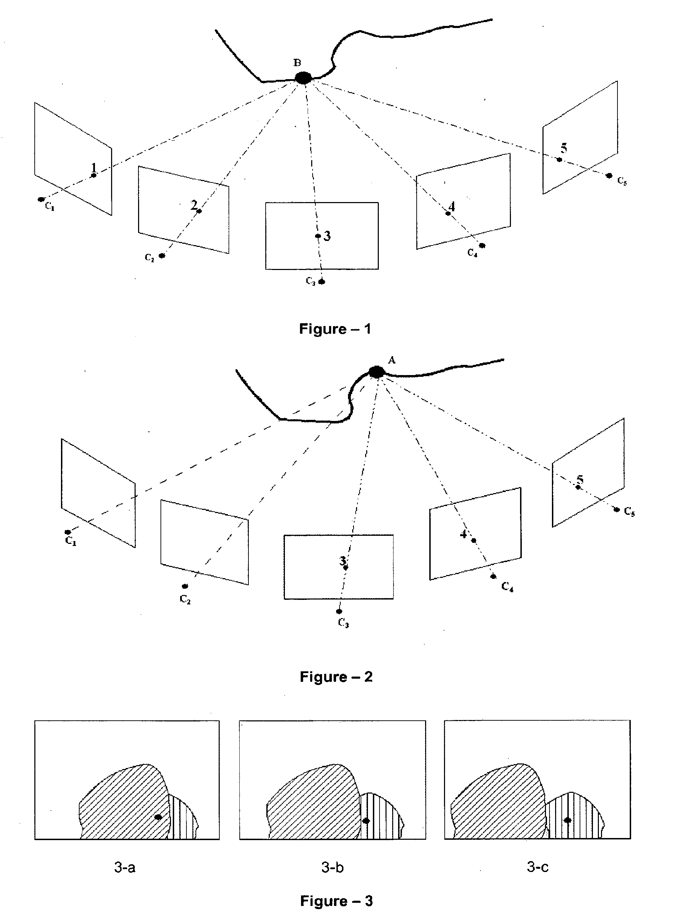

Figure 3-b illustrates the viewing of reference camera.
Figure 3-c illustrates the viewing of the right camera.

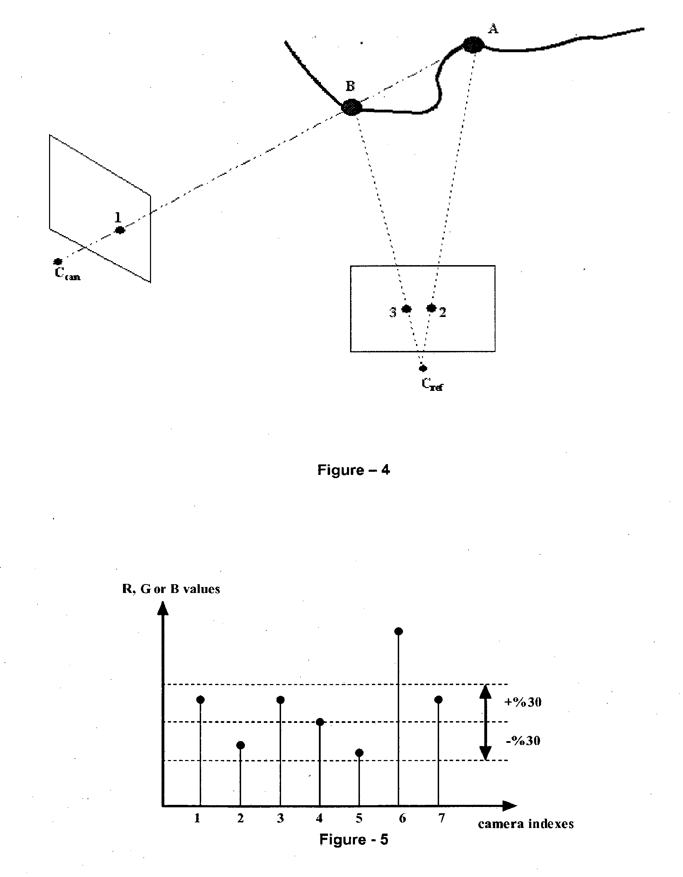

Figure 4 shows the detection of occlusion which is achieved by depth ordering.
Figure 5 shows a graphic of multiple observation of a pixel from multiple cameras which is median filtered to detect noiseless observation.

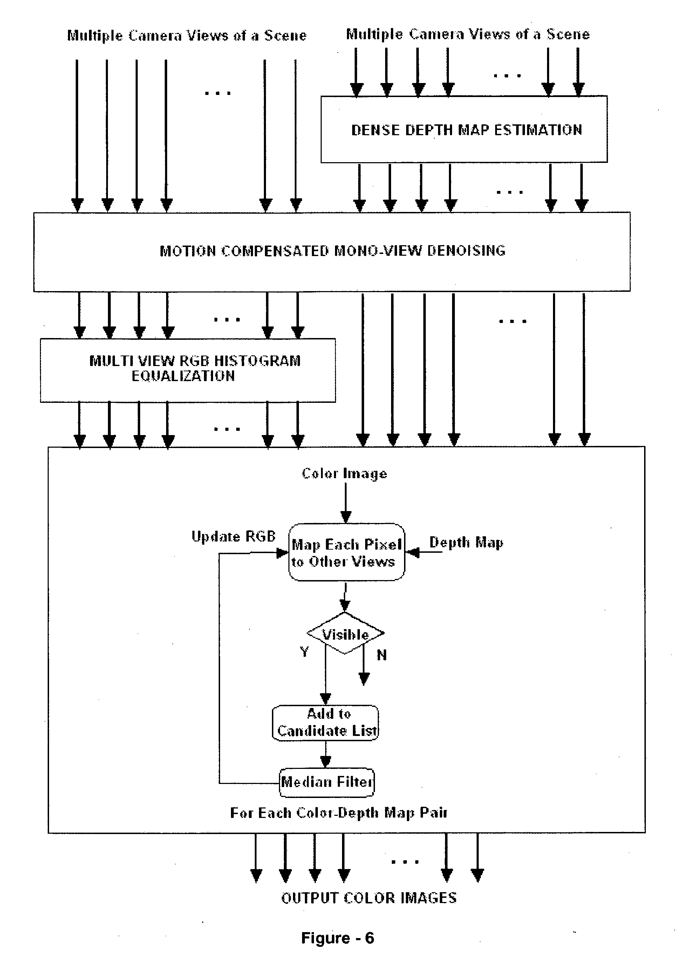

Figure 6 represents the flow chart belongs to the method of this invention.

The parts in the figures are given reference numbers and these numbers are described below.
Cameras (C₁, C₂, C₃, C₄, C₅)
Points (pixels) (1, 2, 4, 5)
Reference pixel (3)
Reference camera (C₃)

### Description of Invention

The method in this invention comprises several steps for removing noise in multiview video. First of all, a histogram structure of the views from different cameras is obtained and then colour normalization is performed to guarantee that all of the views stem from the same colour gamut of the scene in order to utilize the Lambertian assumption as mentioned about it in brief description. Thus, a pre-processing step comprises normalizing the colour and intensity of the images initially, in order to utilize consistent data throughout the denoising process. There is various histogram equalization algorithms related to multi-view processing, hence any of these algorithms can be utilized at that step. The denoising algorithm in this invention is not strictly dependent on the choice of normalization method; however the performance of pre-processing stage affects the success of the denoising step.

In Figure 1, there are five cameras (C₁, C₂, C₃, C₄, C₅) which are located at different positions with different viewing angles simultaneously. Points (1, 2, 3, 4, 5) are pixels which are the viewing of "B" pixel by captured through these cameras, respectively C₁, C₂, C₃, C₄ and C₅. In this method, the normalization is performed according to a reference image which is chosen as the view in the middle of the camera (C₃). Hence, assuming that the reference view has the best colour alignment with the observed scene, other views are matched to the reference view based on histogram. By this means, histogram equalization between different camera views are performed by assigning the middle camera as the reference camera in order to fit every image within same colour gamut. The equalization of histogram is achieved for each channel of RGB data independently as an optional step. In that step, for each channel motion compensation or frame averaging is also performed for temporal noise reduction independently.

The pre-processing step guarantees that the possible pixel matches in different views exactly have the same colour properties. The next step which is the main contribution of the present invention, involves updating RGB values of the pixels for each camera by using multiple observations by considering a sole pixel in one of the views, the extra observations of RGB values are gathered from the other views by mapping of dense depth map estimations. Once, as shown in Figure 1, the pixel (3) in the reference view (C₃) is mapped to the other views by the utilization of 3D structure which means depth maps and multiple observation of the pixel is obtained storing the RGB values of the pixels (1, 2, 4, 5) located other images.

In the next step, the visibility of the corresponding pixel is determined, after mapped to the other images by comparing the depth value. If the pixel corresponds to an occluded region, then the observation from that view is discarded. In Figure 1, since the correspondence 3D point "B" of the pixel in the reference view is one of the closest pixels to the reference view, it is visible from all of the other cameras (C₁, C₂, C₃, C₄, C₅). However for a case shown in Figure 2, point "A" corresponding to the 3D mapping of the pixel in reference camera (C₃) is occluded in the first and second camera (C₁ and C₂) thus invisible where it is visible in the other cameras (C₃, C₄, C₅). In that case, the RGB values obtained from the first two cameras (C₁, C₂) after mapping the reference pixel do not reflect same characteristics of the point "A", hence they are not reliable and should not be considered as extra observations. In Figure 3, the occlusion effect is also shown. For a reference camera (C₃), if it is occluded in a view, as shown in 3-a, the observation belongs to another pixel and hence the observation can not be considered as a candidate RGB value. Then, the detection of occluded pixels is achieved by comparison on the given depth maps, as shown in Figure 4. In Figure 4, two pixels (2 and 3) in the reference view (C₃) are mapped to the same pixel (1) in the other view (C_{con}), however it is clear that point "B" occludes "A", thus pixel (2) is occluded by pixel (3). In general, the detection of occlusion and visibility is performed by comparison of the depth values such that when a pixel is mapped to another view it is marked as visible if the depth value of the pixel is equal or greater than the depth value of the mapped pixel. If the depth value is smaller, then the reference point is occluded, hence the RGB values are not stored.

In the other step, within the visible observations is checked RGB range of the candidates with the corresponding pixel and discard the candidates out of the range of ±30%. Apart from depth comparison, due to small errors in the estimated depth maps the visibility comparison may give unreliable results especially at the boundaries. These errors result in inconsistent RGB variations between the reference pixel at object boundaries and its corresponding matches in the other views. In order to avoid such cases, the observed RGB values are tested if they are within the similar range (±30%) of the reference pixel RGB values. If they do not obey each other, and then the corresponding observation is discarded. As shown in Figure 5, the observed candidate values for a reference pixel (shown as 4) which are within ±30% range of the RGB values of the reference pixel are considered as the true candidate RGB values, and the others are discarded. Hence, pixel indexed as 6 (shown in Figure 5) is discarded from the observations.

In this invention, the candidate RGB values are obtained by mapping each pixel in each view in order to be utilized visibility constraint in the other views. The candidate values involve different noise characteristics since they are obtained from multiple cameras (C₁, C₂, C₃, C₄, C₅). The noise free RGB values are obtained by filtering the observation values for each pixel independently. In this invention at that stage, median filtering is used for removing noise from the observations since it provides consistent RGB values among the matched pixels in different views. Given an observation for an arbitrary pixel as in Figure 5, the same observation values with different order are also obtained for the pixels matched in the other views. Thus, for the matched pixels in different views, same values are obtained which provides consistent RGB values of the same point in 3D at different cameras. This approach ignores the highest and lowest RGB values which are prone to noise with higher probability. In addition, median filtering requires only one iteration to obtain same RGB values for the matched pixels in different views.

The matched pixels in the other views cover all of the pixels which are not occluded by the reference camera, which is actually higher than 90% ration, since it starts visiting from the reference image when all the pixels are visited. After all the pixels in the reference camera (C₃) are visited for the other views, only the unmarked (unvisited) pixels are visited instead of all of the pixels, which save computation and time until all of the pixels in each view are visited. The said steps are repeated for every time instant to obtain noise reduction for the whole multiview video. Whole steps of the said method are shown in Figure-6 as a flow chart.

This method supplies noise reduction in multiple views for a time instant. When the additional frames are considered, before noise reduction among different cameras, first denoising is performed for each camera independently by utilizing any mono-view denoising algorithm working on consecutive frames. In that manner, first noise is reduced in time and temporally consistent videos are obtained for each camera. Then, the denoising algorithm among different cameras is applied for providing consistency among different cameras and removing noisy observations. In this invention, any temporal denoising algorithms can be utilized which provides temporally consistent frames. Moreover, for the estimation of the motion, depth maps is also considered for the consistency of the estimates in terms of 3D structure, such that the matched regions in consecutive frames should have similar depth values in addition to colour similarity. This approach also enhances motion estimates between consecutive frames which also result in enhancement in temporal noise reduction.

## Claims

1. A method for removing noise in multiview video obtained through observation of a scene from multiple cameras (C₁, C₂, C₃, C₄, C₅), **characterized in that** it comprises the following steps:
• choosing a reference view,
• normalizing the colour and intensity of the images according to said reference view,
• mapping each pixel in the reference view to the other camera views by utilizing given view dependent depth maps, wherein said depth maps are available, thereby obtaining multiple corresponding pixels (1, 2, 4, 5) for each said reference pixel,
• determining the visibility of each corresponding pixel (1, 2, 4, 5) by comparing its depth value with the depth value of the reference pixel in the reference view, thereby obtaining a set of visible observations (4, 5),
• checking whether the RGB values of the visible observations (4, 5) are within a predetermined range of RGB values with respect to the RGB value of the reference pixel and storing them in a vector if they are within this range,
• among stored RGB values, getting the median value and assigning this value to the reference pixel and all the other visible corresponding pixels.

2. A method according to claim 1, wherein said reference view is chosen as the view of the camera (C₃) in the middle of the setup.

3. A method according to claim 1, wherein, before noise reduction among different cameras, first denoising is performed for each camera independently by utilizing any mono-view denoising algorithm working on consecutive frames.

4. A method according to claim 1, wherein the mapped pixels in the other views are marked as "visited" in a check map.

5. A method according to claim 4, wherein, after all the pixels in the reference view are visited, the unvisited pixels in the other views are visited.

6. A method according to claim 5, wherein the steps are repeated until all of the pixels in each view are visited.

7. A method according to claim 6, wherein the steps are repeated for every time instant to obtain noise reduction for the whole multiview video.

## Patentansprüche

1. Methode zur Entfernung von Rauschen bei Mehrfachansichtvideo, erhalten durch Beobachtung oder Betrachtung einer Szene von mehreren Kameras (C₁, C₂, C₃, C₄, C₅), **dadurch gekennzeichnet, dass** sie die folgenden Schritte umfasst:
- Auswählen einer Referenzansicht,
- Normieren der Farbe und Intensität der Bilder entsprechend der Referenzansicht,
- Mapping (Zuordnen) jedes Pixels der Referenzansicht zu den anderen Kameraansichten durch Verwendung gegebener ansichtsabhängiger Tiefenkarten, wobei die Tiefenkarten verfügbar sind, wodurch mehrere korrespondierende Pixel (1, 2, 4, 5) für jedes der Referenzpixel erhalten werden,
- Bestimmung der Sichtbarkeit jedes korrespondierenden Pixels (1, 2, 4, 5) durch Vergleichen seines Tiefenwertes mit dem Tiefenwert des Referenzpixels der Referenzansicht, wodurch ein Satz sichtbarer Betrachtungen oder Beobachtungen (4, 5) erhalten wird,
- Überprüfen ob die RGB-Werte der sichtbaren Betrachtungen oder Beobachtungen (4, 5) innerhalb eines vorbestimmten Bereiches von RGB-Werten bezüglich der RGB-Werte des Referenzpixels liegen und Speichern dieser in einem Vektor, sofern sie in diesem Bereich liegen,
- Bestimmen des Medianwertes der gespeicherten RGB-Werte und Zuordnen des Wertes zu dem Referenzpixel und allen anderen sichtbaren korrespondierenden Pixeln.

2. Methode nach Anspruch 1, wobei als Referenzansicht die Ansicht der Kamera (C₃) in der Mitte des Aufbaus ausgewählt ist.

3. Methode nach Anspruch 1, wobei, vor Reduktion des Rauschens innerhalb verschiedener Kameras, erstes Entrauschen für jede Kamera unabhängig durchgeführt wird, durch Verwendung eines Einzelansicht-Entrausch-Algorithmus, der aufeinanderfolgende Bilder (frames) bearbeitet.

4. Methode nach Anspruch 1, wobei die gemappten (zugeordneten) Pixel der anderen Ansichten als "Aufgesucht" in einer Überprüfungskarte (check map) markiert werden.

5. Methode nach Anspruch 4, wobei, nachdem alle Pixel in der Referenzansicht aufgesucht wurden, die nichtaufgesuchten Pixel in den anderen Ansichten aufgesucht werden.

6. Methode nach Anspruch 5, wobei die Schritte wiederholt werden, bis alle Pixel einer Ansicht aufgesucht wurden.

7. Methode nach Anspruch 6, wobei die Schritte für jeden Zeitpunkt wiederholt werden, um Rauschreduktion für das gesamte Mehrfachansichtvideo zu erhalten.

## Revendications

1. Procédé pour supprimer le bruit dans une vidéo multivue obtenue par le biais de l'observation d'une scène à partir de multiples caméras (C₁, C₂, C₃, C₄, C₅), **caractérisé en ce qu'**il comprend les étapes suivantes :
- choisir une vue de référence,
- normaliser la couleur et l'intensité des images en fonction de ladite vue de référence,
- mapper chaque pixel dans la vue de référence aux autres vues de caméra en utilisant des cartes de profondeur dépendantes de la vue données, où lesdites cartes de profondeur sont disponibles, obtenant ainsi de multiples pixels correspondants (1, 2, 4, 5) pour chaque dit pixel de référence,
- déterminer la visibilité de chaque pixel correspondant (1, 2, 4, 5) en comparant sa valeur de profondeur avec la valeur de profondeur du pixel de référence dans la vue de référence, obtenant ainsi un ensemble d'observations visibles (4, 5),
- vérifier si les valeurs RVB des observations visibles (4, 5) sont à l'intérieur d'une plage prédéterminée de valeurs RVB par rapport à la valeur RVB du pixel de référence et les stocker dans un vecteur si elles sont à l'intérieur de cette plage,
- parmi les valeurs RVB stockées, obtenir la valeur médiane et assigner cette valeur au pixel de référence et à tous les autres pixels correspondants visibles.

2. Procédé selon la revendication 1, dans lequel ladite vue de référence est choisie comme la vue de la caméra (C₃) au milieu du réglage.

3. Procédé selon la revendication 1, dans lequel, avant la réduction de bruit parmi différentes caméras, un premier débruitage est effectué pour chaque caméra indépendamment en utilisant un quelconque algorithme de débruitage mono-vue fonctionnant sur des trames consécutives.

4. Procédé selon la revendication 1, dans lequel les pixels mappés dans les autres vues sont marqués comme « visités » dans une carte de vérification.

5. Procédé selon la revendication 4, dans lequel, après que tous les pixels dans la caméra de référence sont visités, les pixels non visités dans les autres vues sont visités.

6. Procédé selon la revendication 5, dans lequel les étapes sont répétées jusqu'à ce que tous les pixels dans chaque vue soient visités.

7. Procédé selon la revendication 6, dans lequel les étapes sont répétées pour chaque instant de temps pour obtenir une réduction de bruit pour la vidéo multivue entière.
